# EUROPEAN PATENT APPLICATION

(11) **EP 3 035 195 A1**
(43) Date of publication of application: **22.06.2016**
(21) Application number: 14198249.6
(22) Date of filing: 16.12.2014
(51) Int. Cl.: G06F 12/02

(54) **A wear leveling method and a wear leveling system for a non-volatile memory**

(71) Applicant: SFNT Germany GmbH, 82110 Germering (DE)
(72) Inventor: LIEPERT, Martin, D-82110 Germering (DE); ZUNKE, Michael, D-82110 Germering (DE)
(74) Representative: Scheer, Luc

(57) **Abstract**

There is provided a wear leveling method for a non-volatile memory having blocks of a predetermined number of bytes, the wear leveling method comprising:
a) carrying out a storing operation in which at least one data cluster is written in an allocated block of the non-volatile memory, wherein an allocation table allocates each data cluster to a block of the non-volatile memory,
b) a wear leveling step in which it is randomly determined for each data cluster written in step a) whether the data cluster is to be reallocated and in which the data cluster is marked for reallocation only in case it is determined for reallocation,
c) reallocating the data clusters marked in step b), and
d) repeating steps a) to c).

## Description

The present invention relates to a wear leveling method and a wear leveling system for a non-volatile memory having blocks of a predetermined number of bytes.

Such non-volatile memories (e.g. EEPROM or FLASH) suffer from the limited number of write cycles which can be applied to one memory cell. Physically, it is caused by the gate oxide in floating-gate transistors accumulating trapped electrons. With increasing number of erase/write cycles the electric field of these trapped electrons is getting larger and larger causing the threshold window of the cell to become too small to get correctly recognized as "programmed" state.

There are known methods which are aimed to get the best possible wear leveling behavior. However, these methods often track the writing operations and carry out a reallocation of written data based on the tracked writing operations. This involves extensive parsing of tracking information and needs computing power for carrying out these steps. Such methods are not suitable for small scale microcontrollers with limited non-volatile memory, small data cluster size and low CPU performance.

In view thereof, it is object of the invention to provide an improved wear leveling method for a non-volatile memory.

The object is solved by a wear leveling method for a non-volatile memory having blocks of a predetermined number of bytes, the wear leveling method comprising:
a) carrying out a storing operation in which at least one data cluster is written in an allocated block of the non-volatile memory, wherein an allocation table allocates each data cluster to a block of the non-volatile memory,
b) a wear leveling step in which it is randomly determined for each data cluster written in step a) whether the data cluster is to be reallocated and in which the data cluster is marked for reallocation only in case it is determined for reallocation,
c) reallocating the data clusters marked in step b), and
d) repeating steps a) to c).

According to the inventive wear leveling method no tracking of the written data clusters and/or no counting of the written data clusters is necessary so that a light-weight and efficient wear leveling method is provided. In particular, the inventive wear leveling method has a low complexity, a good performance and needs no additional data records for tracking write cycles in the non-volatile memory.

A non-volatile memory can be an EEPROM or a FLASH.

In order to reallocate the data clusters marked in step b), the data stored in the respective block is copied to a new block of the non-volatile memory. Further, the allocation table is correspondingly amended so that a further write or read operation will be directed to the correct block of the non-volatile memory. The data of the original block can be maintained or can be erased.

Further developments of the inventive wear leveling method are given in the dependent claims.

If step c) is carried out during step a) the marking of the data cluster to be reallocated in step b) can be realized by the step of reallocation itself.

The storing operation according to step a) can comprise storing of one single data cluster or of more than one single data cluster.

The wear leveling step b) can further comprise:
e) randomly determining whether an arbitrary data cluster of the allocation table is to be selected,
f) randomly selecting a data cluster of the allocation table only in case it is determined in step e) that a data cluster of the allocation table is to be selected, determining whether the selected data cluster is occupied and marking the data cluster for reallocation only in case it is occupied.

The wear leveling step b) can be carried out during step a) or after finishing step a). The step of randomly determining for each data cluster written in step a) whether the data cluster is to be reallocated can be carried out before or after steps e) and f).

In addition, a computer program product is provided which comprises software code in order to carry out the steps of the inventive wear leveling method (including the further developments of the inventive wear leveling method) when the product is being executed.

Further, a non-transitory computer readable storage medium is provided, which comprises software code executable on a computer to cause the computer to carry out the steps of the inventive wear leveling method (including the further developments of the inventive wear leveling method).

There is further provided a wear leveling system for a non-volatile memory having blocks of a predetermined number of bytes, comprising a control module carrying out the following steps:
a) carrying out a storing operation in which at least one data cluster is written in an allocated block of the non-volatile memory, wherein an allocation table allocates each data cluster to a block of the non-volatile memory,
b) a wear leveling step in which it is randomly determined for each data cluster written in step a) whether the data cluster is to be reallocated and in which the data cluster is marked for reallocation only in case it is determined for reallocation,
c) reallocating the data clusters marked in step b) and
d) repeating steps a) to c).

The control module can comprise a controller or a microcontroller.

The wear leveling system can comprise features for carrying out the inventive wear leveling method (including the further developments of the inventive wear leveling method). In particular, the control module can be software and/or hardware. The inventive wear leveling method can comprise method steps described in connection with the inventive wear leveling system. The inventive wear leveling method and/or the inventive wear leveling system can be implemented in a protection unit for protecting an application against unauthorized use on a computer system.

It is understood that the features named above and still to be explained below can be used not only in the given combinations, but also in other combinations or alone, without departing from the scope of the present invention.

The invention is explained in further detail below by way of example using the attached drawing which also disclose features essential to the invention. There are shown in:
- Fig. 1: a schematic block diagram of a micro computer system according to an embodiment of the present invention;
- Fig. 2: a schematic representation of a file allocation table 10 and the blocks of the non-volatile memory 3 in order to describe the used file system of the micro computer system 1 shown in Fig. 1;
- Fig. 3: a flow chart for describing the inventive wear leveling method;
- Fig. 4: a schematic representation of the marking table 11;
- Fig. 5: a schematic representation according to Fig. 2 for describing the reallocation of the third data cluster D3;
- Fig. 6: a schematic representation according to Fig. 2 for describing the reallocation of the second data cluster D2;
- Fig. 7: a schematic representation for explaining an alternative file system of the micro computer system 1 according to Fig. 1, and
- Fig. 8: a schematic representation according to Fig. 7 for describing the reallocation of the third data cluster D3.

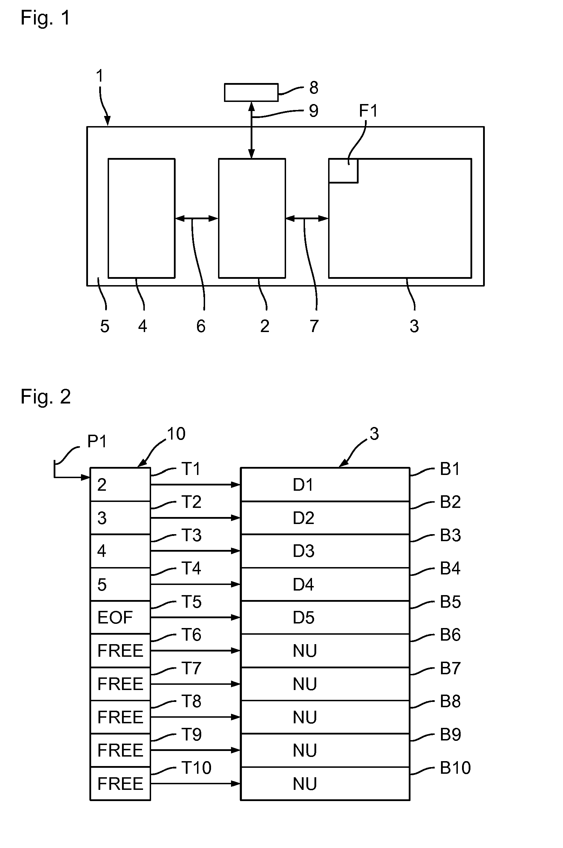

Fig. 1 is a schematic block diagram illustrating a micro computer system 1 according to an embodiment of the present invention. The micro computer system 1 includes a microcontroller 2, a flash memory 3 and a random access memory 4 which are integrated on one chip 5.

The flash memory 3 and the random access memory 4 can be accessed by the microcontroller 2 via communication channels 6, 7. The micro computer system 1 further comprises an interface 8 which is connected to the microcontroller 2 via a communication channel 9. The microcontroller 2 can execute a plurality of commands implemented by hardware and/or software to perform operations such as storing data, reading data and erasing data, etc. in the flash memory 3 and in the random access memory 4. In the present embodiment the micro computer system 1 is designed such that a wear leveling method for the flash memory 3 as described in connection with the figures 2 to 8 can be carried out.

It is assumed that a file F1 is stored in the flash memory 3 and that the microcontroller 2 during execution of an application has to access the file F1 leading to writing data in the flash memory 3.

The file system of the micro computer system 1 uses a file allocation table 10 as indicated in Fig. 2. The file allocation table 10 shown in Fig. 2 comprises ten cells T1, T2, T3, ... T10 and each cell T1 - T10 points to a block B1, B2, B3, ... B10 of the flash memory 3. This static allocation of cells T1 - T10 of the file allocation table 10 to the blocks B1 - B10 of the flash memory 3 is defined at the time of formatting and cannot be amended thereafter (except another formatting step is carried out). Each block B1 - B10 can store a predetermined number of bytes. It is assumed that the file F1 comprises five data clusters D1, D2, D3, D4, and D5, wherein one data cluster D1 - D5 can be stored in one block B1 - B10 of the flash memory 3.

The entries in the cells T1 -T10 of the file allocation table 10 can contain an indication of the cell T1 - T10 of the next data cluster D1 - D5, a marker "EOF" indicating the end of the file and a marker "FREE" indicating unused blocks B1 - B10. Further types of entries in the cells T1 - T10 are possible. Of course, the file allocation table 10 can comprise more than ten cells T1 - T10 and the flash memory can comprise more than ten blocks B1 - B10. The number of ten cells and ten blocks was chosen only for simplifying the description and the drawing.

Since a pointer P1 for the file F1 points to the first cell T1, the first data cluster D1 is stored in the first block B1. In the first cell T1, the next cell is indicated as cell 2 so that the second data cluster D2 is stored in the second block B2. Due to the entries in the following cells T3 - T10, the third to fifth data clusters D3 - D5 are stored in the blocks B3 to B5 and the blocks B6 - B10 are not used which is indicated with the "NU" in the respective blocks B6 - B10 in Fig. 2.

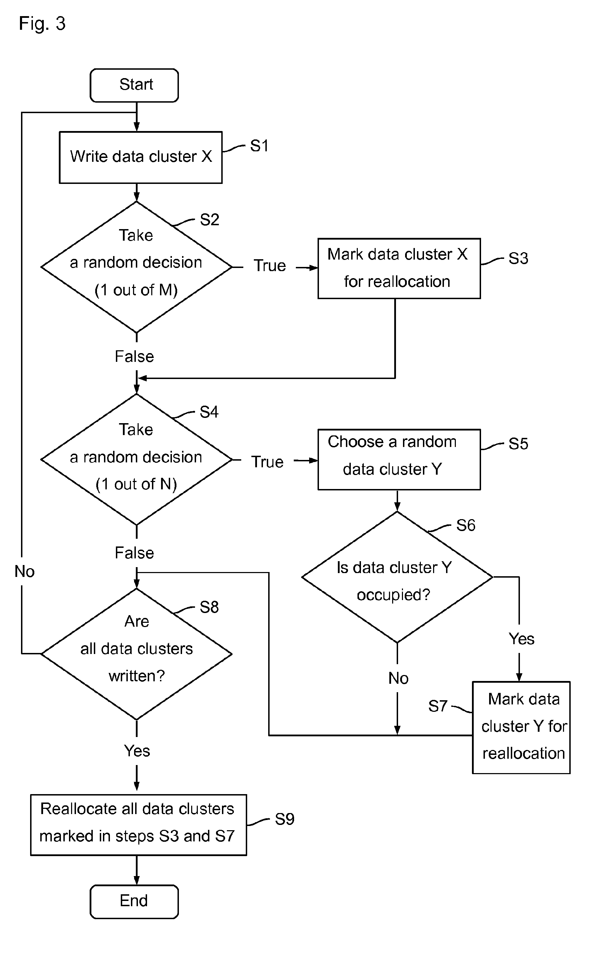

It is assumed that during the execution of the application, the data cluster D3 was amended and has to be stored in amended form in the flash memory 3. Therefore, a storing operation according to the flow chart of Fig. 3 is carried out. The storing operation is started and in step S1 a first data cluster X (here data cluster D3) is written in the block B3 since the data cluster D3 is allocated to the third block B3 according to the allocation table 10 (Fig. 2).

In the following step S2, it is randomly determined whether the written data cluster D3 is to be reallocated. If the determination is true (with a probability of 1/M, wherein M can be 150), the data cluster D3 is marked for reallocation in step S3. Thereafter, step S4 is carried out. If the determination in step S2 is false, then step S3 is not carried out and it is moved forward to step S4.

In step S4, it is randomly determined whether an arbitrary cluster is to be selected for reallocation. If the determination is true (with a probability of 1/N, wherein N can be 150), a random data cluster Y (for example a cell of the file allocation table 10) is selected in step S5. Thereafter, it is checked whether the selected data cluster Y is occupied (step S6). If the data cluster Y is occupied (which is true for the cells T1 - T5), the data cluster Y is marked for reallocation in step S7. A data cluster Y is considered as being occupied if the entry in the corresponding cell T1 - T10 of the file allocation table 10 is not "FREE". In this case the data of the allocated block B1 - B10 are used.

If the data cluster Y is not occupied, the allocated block B1 - B10 is not used at the moment and the data cluster Y is not marked for reallocation.

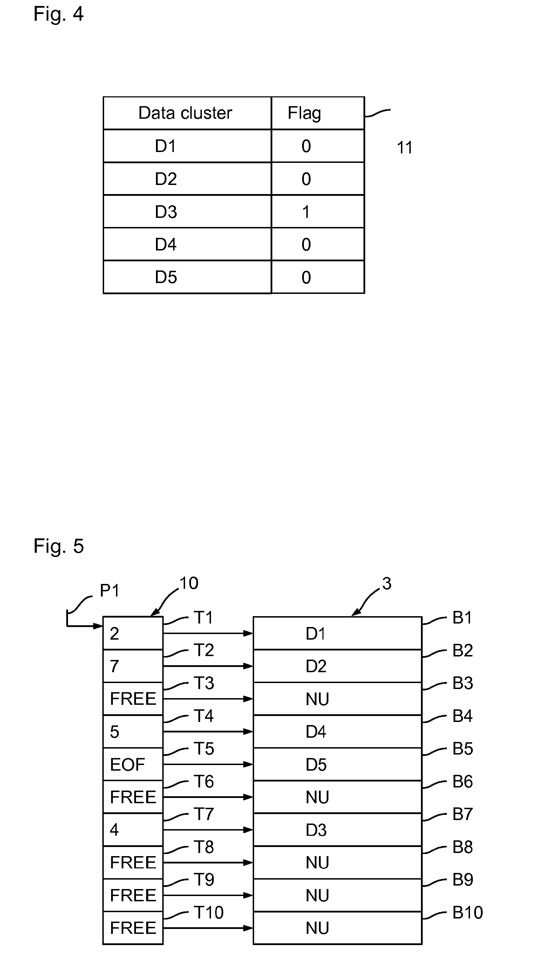

Thereafter, it is determined whether all data clusters to be written in the present storing operation have been written. If not all data clusters have already been written, then the storing operation proceeds with step S1. If all data clusters have already been written, step S9 is carried out. In step S9, all data clusters marked in steps S3 and S7 are reallocated. For marking the cluster a marking table 11 as shown in Fig. 4 can be used. If the flag value is "1", the data cluster is to be reallocated. If the flag value is "0", the data cluster is not to be reallocated.

In the present embodiment, it is assumed that the third data cluster D3 is marked for reallocation in step S3. Therefore, a free or not used block B1 - B10 of the flash memory 3 is selected. This selection can be carried out randomly. It is assumed that the seventh block B7 is selected. Therefore, the data cluster D3 is stored or written in block B7 (for example by copying the data of block B3 to block B7) and the allocation table is correspondingly amended as indicated in Fig. 5 so that the third data cluster D3 is now allocated to the seventh block B7. Since the block B3 is no longer used for the data of the third data cluster D3, the block B3 is marked as "FREE" in the file allocation table 10. Therefore, it is not necessary to erase the data in block B3 for reallocation. However, it is possible to carry out such an erasing.

It is assumed that during the execution of the application the third data cluster D3 has to be stored again. Therefore, the storing operation according to Fig. 3 is carried out again and the third data cluster D3 is stored in the seventh block B7 due to the file allocation table 10 of Fig. 5. In this way, a dynamic wear leveling is carried out.

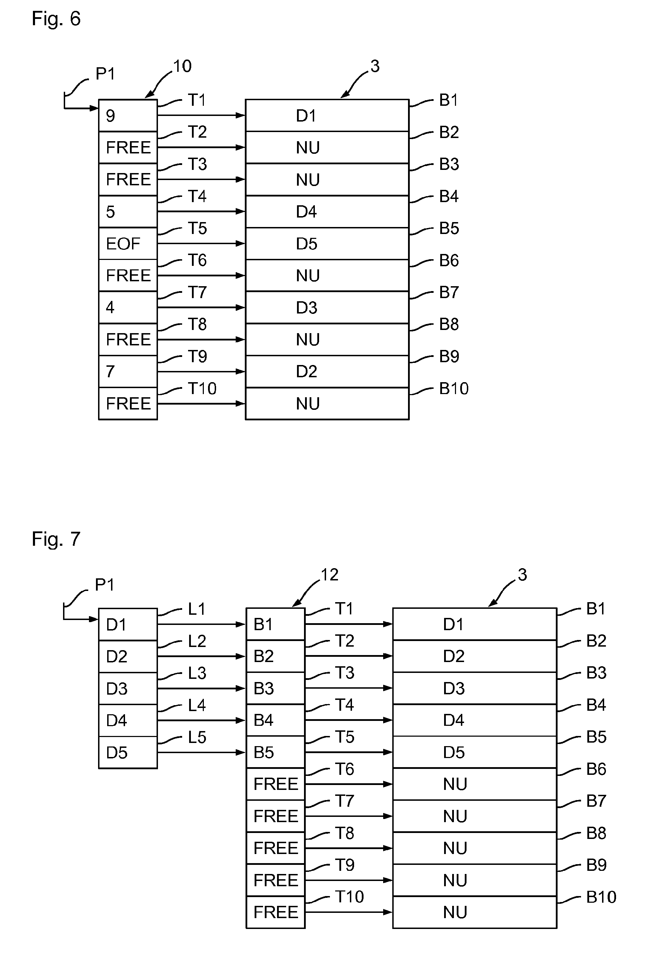

Further, it is assumed that after carrying out the writing step S1, the decision in step S2 is false, the decision in step S4 is true and the second data cluster D2 is selected in step S6 as data cluster Y. Therefore, in step S9, the second data cluster D2 is reallocated to a free memory block. In the present embodiment, it is reallocated to the ninth memory block B9 as indicated in Fig. 6. The selection of the block B9 for reallocation can be carried out randomly. By reallocating the data cluster D2, a static wear leveling is realized.

Step S9 can be realized by a parallel thread executed by the microcontroller 2, wherein the microcontroller 2 continuously checks the marking table 11. In case it comes across a marked data cluster, it physically moves the data cluster to a new block of the flash memory 3 and accordingly adjusts the file allocation table 10.

The embodiment described above refers to a file system using a file allocation table. In case the file system is using a physical address translation table 12, it is possible to carry out the reallocation step immediately after it is determined that the respective data cluster is to be reallocated. As schematically shown in Fig. 7, the logical addresses L1, L2, L3, L4 and L5 of the data clusters D1 - D5 are translated to the respective physical addresses of the blocks B1 - B10 using the physical address translation table 12. The physical address translation table 12 comprises in the described embodiment one cell T1, T2, T3, ... T10 for each block B1 - B10 of the flash memory 3 so that for each logical address L1 - L5 the corresponding physical address can be stored.

It is assumed that during the execution of the application, the data cluster D3 was amended and has to be stored in amended form of the flash memory 3. Therefore, storing operation according to the flow chart of Fig. 3 is carried out. After writing the third data cluster D3, it is assumed that the data cluster D3 is determined in step S2.

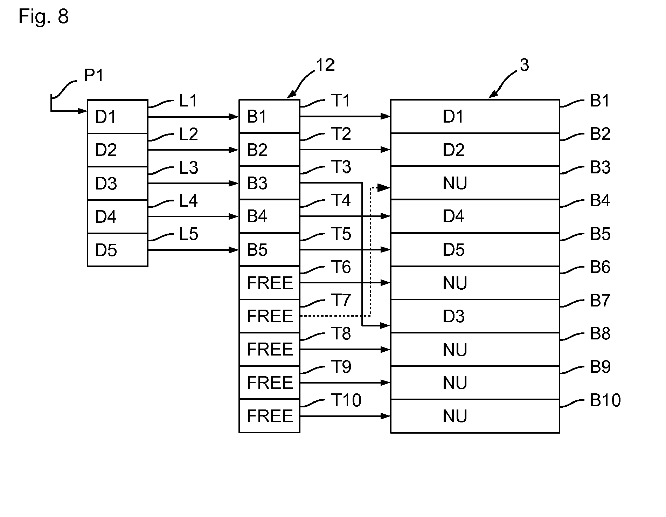

Instead of marking the third data cluster D3 as to be reallocated in step S3, the step S3 can be amended such that the reallocation is carried out immediately. This can be done by copying the data of the block B3 to the block B7 and by respectively amending the physical address translation table 12 as schematically shown in Fig. 8.

Thereafter, the storing operation proceeds with step S3.

In the same way, step S7 can be amended such that instead of marking the data cluster Y the selected data cluster Y is reallocated and the physical address translation table 12 is correspondingly amended.

Of course it is also possible to use the storing operation according to Fig. 3 in the case of a file system with a physical address translation table 12. That means that the reallocation is carried out in step S9 after all data clusters have been written (step S8).

The steps S2 and S3 in the storing operation are responsible for a pure dynamic wear leveling and the steps S4 to S7 of the storing operation are responsible for a pure static wear leveling. In the dynamic wear leveling, the more a certain data cluster has been written, the higher is the probability that it gets reallocated. In the static wear leveling, the more data clusters in the file systems are occupied, the higher is the possibility that a data cluster will be reallocated.

This combination of dynamic wear leveling and static wear leveling cooperates very well even under different situations.

It is assumed that 5% of a file system is occupied and that 1% of the data clusters D1 - D5 are written very frequently. In this case, the dynamic wear leveling can make use of the large number of empty blocks B1 - B10 and the very frequently written data clusters D1 - D5 (1% of the data clusters) are distributed very well. Since the static wear leveling activity is 5%, it does not provide much contribution.

In case 50% of the file system is occupied and 25% of the data clusters are frequently written, the static wear leveling activity is 50%. Therefore, static data clusters are quite often moved to an empty block B1 - B10. The resulting gap blocks (free blocks) can be used by dynamic wear leveling and these gap blocks have low write cycles which is good for the wear leveling. On the long run, the combination of dynamic wear leveling and static wear leveling makes efficient use of all blocks in the file system.

In case that 50% of the file system is used and 40% of the data clusters are written frequently, a large portion of the occupied data clusters are written frequently. The contribution of the static wear leveling is low. However, the dynamic wear leveling takes care that the frequently written data clusters are distributed over the whole file system.

When 95% of the file system is occupied and 20% of the data clusters are written very frequently, the static wear leveling activity is very high. Occupied data clusters are frequently "pushed" away. This helps to interleave the huge amount of static data clusters with the frequently written data clusters. On the long run, the combination of dynamic wear leveling and static wear leveling can make efficient use of all blocks of the file system.

According to the inventive method, no tracking of the written data clusters and/or no counting of the written data clusters is necessary so that a light-weight and efficient wear leveling method is provided. In particular, the inventive wear leveling method has low complexity, good performance and needs no additional data records for tracking write cycles in the flash memory 3. Therefore, the inventive wear leveling method is especially suitable for small scale microcontrollers with limited flash memory (or any other non-volatile memory), small data cluster size and low performance of a central processing unit.

The inventive wear leveling method can be implemented in a protection unit for protecting an application against unauthorized use on a computer system. A protection unit can be embodied as a hardware key (also often named dongle). Further, the protection unit can comprise a controller (e.g. a microcontroller), a non-volatile memory and an input/output unit. The protection unit can be embodied as a self-contained device and the controller and the non-volatile memory can be formed in an integrated manner on one single chip. The computer system can be a network of computers (which can provide distributed computing), a single computer and/or a virtual machine. A virtual machine can be a software implementation of a machine (e.g. a computer) that executes programs of software applications like a physical machine.

The wear protection unit can provide at least one license model for using the application to be protected.

## Claims

1. A wear leveling method for a non-volatile memory having blocks of a predetermined number of bytes, the wear leveling method comprising:
a) carrying out a storing operation in which at least one data cluster is written in an allocated block of the non-volatile memory, wherein an allocation table allocates each data cluster to a block of the non-volatile memory,
b) a wear leveling step in which it is randomly determined for each data cluster written in step a) whether the data cluster is to be reallocated and in which the data cluster is marked for reallocation only in case it is determined for reallocation,
c) reallocating the data clusters marked in step b), and
d) repeating steps a) to c).

2. The wear leveling method according to claim 1, wherein the written data cluster is selected with a probability of 1/M in step b), wherein M lies in the range of 50 - 200.

3. The wear leveling method according to claim 1 or 2, wherein the wear leveling step b) further comprises:
e) randomly determining whether an arbitrary data cluster of the allocation table is to be selected,
f) randomly selecting a data cluster of the allocation table only in case it is determined in step e) that a data cluster of the allocation table is to be selected, determining whether the selected data cluster is occupied and marking the data cluster for reallocation only in case it is occupied.

4. The wear leveling method according to claim 3, wherein the arbitrary data cluster is selected with a probability of 1/N in step e), wherein N lies in the range of 50 - 200.

5. The wear leveling method according to one of the above claims, wherein the block to which the marked data cluster is reallocated in step c) is randomly determined.

6. The wear leveling method according to one of the above claims, wherein step c) is carried out after finishing the storing operation of step a).

7. The wear leveling method according to one of the claims 1 to 5, wherein step c) is carried out during the storing operation of step a).

8. Computer program product, which comprises software code in order to carry out the steps of one of the above claims, when the product is being executed.

9. A wear leveling system for a non-volatile memory having blocks of a predetermined number of bytes, comprising a control module carrying out the following steps:
a) carrying out a storing operation in which at least one data cluster is written in an allocated block of the non-volatile memory, wherein an allocation table allocates each data cluster to a block of the non-volatile memory,
b) a wear leveling step in which it is randomly determined for each data cluster written in step a) whether the data cluster is to be reallocated and in which the data cluster is marked for reallocation only in case it is determined for reallocation,
c) reallocating the data clusters marked in step b) and
d) repeating steps a) to c).
